# EUROPEAN PATENT SPECIFICATION

(11) **EP 3 502 563 B1**
(45) Date of publication and mention of the grant of the patent: **26.01.2022**
(21) Application number: 18214255.4
(22) Date of filing: 19.12.2018
(51) Int. Cl.: F23R 3/00, F23R 3/06

(54) **APPARATUS FOR MITIGATING PARTICULATE ACCUMULATION ON A COMBUSTOR WALL OF A GAS TURBINE**
VORRICHTUNG ZUR VERRINGERUNG DER PARTIKELANSAMMLUNG AN EINER BRENNKAMMERWAND EINER GASTURBINE
APPAREIL PERMETTANT D'ATTÉNUER L'ACCUMULATION DE PARTICULES SUR UNE PAROI DE CHAMBRE DE COMBUSTION D'UNE TURBINE À GAZ

(30) Priority: 19.12.2017 US 201762607599 P
(43) Date of publication of application: 26.06.2019
(73) Proprietor: Raytheon Technologies Corporation, Farmington, CT 06032 (US)
(72) Inventor: MOURA, Dennis M., South Windsor, CT 06074 (US); CLUM, Carey, East Hartford, CT 06118 (US)
(74) Representative: Dehns

(56) References cited:
- WO-A2-2016/025054
- WO-A2-2016/099662
- US-A1- 2009 081 024
- US-A1- 2016 123 154
- US-A1- 2016 333 735
- US-A1- 2017 114 720
- US-A1- 2017 191 417
- US-B2- 9 046 269

## Description

### BACKGROUND

The subject matter disclosed herein generally relates to gas turbine engines and, more particularly, to method and apparatus for mitigating particulate accumulation on cooling surfaces of components of gas turbine engines.

In one example, a combustor of a gas turbine engine may be configured and required to burn fuel in a minimum volume. Such configurations may place substantial heat load on the structure of the combustor (e.g., panels, shell, etc.). Such heat loads may dictate that special consideration is given to structures, which may be configured as heat shields or panels, and to the cooling of such structures to protect these structures. Excess temperatures at these structures may lead to oxidation, cracking, and high thermal stresses of the heat shields or panels. Particulates in the air used to cool these structures may inhibit cooling of the heat shield and reduce durability. Particulates, in particular atmospheric particulates, include solid or liquid matter suspended in the atmosphere such as dust, ice, ash, sand and dirt.

US 2016/333735 A1 discloses a first engine component spaced from a second engine component, the second component comprising a plurality of openings. A plurality of cooling features extend from an inner surface of the second engine component.

WO 2016/099662 A2 discloses a first engine component and a second engine component, the second engine component including at least one aperture arranged at an angle. At least one cavity is provided in the cooling surface of the first engine component, a turbulator being paired with each cavity.

### SUMMARY

According to a first aspect of the invention, there is provided a shell of a combuster for use in a gas turbine engine as described in claim 1.

The particulate capture device may further comprise: a scoop portion projecting outward from the outer surface of the combustion liner and into the airflow path proximate the outer surface, wherein the scoop portion is configured to capture airflow and particulate flowing through the airflow path and direct the airflow and particulate through a first orifice and into a chamber of the particulate capture device.

The particulate capture device may be shaped to turn the airflow between the first orifice and the primary aperture such that air particulate is forced to separate from the airflow within the chamber.

An area of the first orifice may be greater than or equal to three times an area of the primary aperture.

The primary apertures may be located away from the first orifice at a distance less than or equal to three times a height of the first orifice.

The combuster shell may further include a heat shield panel particulate capture device attached to the heat shield panel, the heat shield panel particulate capture device being configured to receive at least one of airflow and particulate from the primary aperture, wherein the heat shield panel particulate capture device is configured to aerodynamically separate the airflow from the particulate, and direct the airflow towards a secondary aperture of the heat shield panel, wherein the heat shield panel particulate capture device further comprises a collection well configured to redirect the airflow to allow for separation of the particulate from the airflow while allowing the particulates to collect within the collection well, the collection well being located within the heat shield panel particulate capture device.

The collection well may be shaped to redirect the airflow such that airflow separates from the particulate and the airflow continues to flow to the secondary aperture of the heat shield panel.

The heat shield panel particulate capture device may further comprise: a dam projecting out from the second surface of the heat shield heat shield panel, wherein the dam extends the collection well away from the second surface, and wherein the collection well is configured to redirect the airflow around the dam.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should be considered exemplary. With reference to the accompanying drawings, like elements are numbered alike:
FIG. 1 is a partial cross-sectional illustration of a gas turbine engine, in accordance with an embodiment of the disclosure;
FIG. 2 is a cross-sectional illustration of a combustor, in accordance with an embodiment of the disclosure;
FIG. 3a is an enlarged cross-sectional illustration of a heat shield panel and combustion liner of a combustor in a configuration which is not part of the present invention;
FIG. 3b is a cross-sectional illustration of a particulate capture system for a combustor of a gas turbine engine, in accordance with an embodiment of the disclosure;
FIG. 4a is a configuration of a particulate capture system for a combustor of a gas turbine engine, in accordance with an embodiment of the disclosure;
FIG. 4b is a configuration of a particulate capture system for a combustor of a gas turbine engine, in accordance with an embodiment of the disclosure;
FIG. 4c is a configuration of a particulate capture system for a combustor of a gas turbine engine, in accordance with an embodiment of the disclosure;
FIG. 5 is a cross-sectional illustration of a particulate capture system for a combustor of a gas turbine engine which is not part of the present invention; and
FIG. 6 is a cross-sectional illustration of a particulate capture system for a combustor of a gas turbine engine, in accordance with an embodiment of the disclosure.

The detailed description explains configurations of the present disclosure, together with advantages and features, by way of example with reference to the drawings.

### DETAILED DESCRIPTION

A detailed description of one or more configurations of the disclosed apparatus and method are presented herein by way of exemplification and not limitation with reference to the Figures.

Combustors of gas turbine engines, as well as other components, experience elevated heat levels during operation. Impingement and convective cooling of panels of the combustor wall may be used to help cool the combustor. Convective cooling may be achieved by air that is channeled between the panels and a liner of the combustor. Impingement cooling may be a process of directing relatively cool air from a location exterior to the combustor toward a back or underside of the panels.

Thus, combustion liners and heat shield panels are utilized to face the hot products of combustion within a combustion chamber and protect the overall combustor shell. The combustion liners may be supplied with cooling air including dilution passages which deliver a high volume of cooling air into a hot flow path. The cooling air may be air from the compressor of the gas turbine engine. The cooling air may impinge upon a back side of a heat shield panel that faces a combustion liner inside the combustor. The cooling air may contain particulates, which may build up on the heat shield panels overtime, thus reducing the cooling ability of the cooling air. Embodiments disclosed herein seek to address particulate adherence to the heat shield panels in order to maintain the cooling ability of the cooling air.

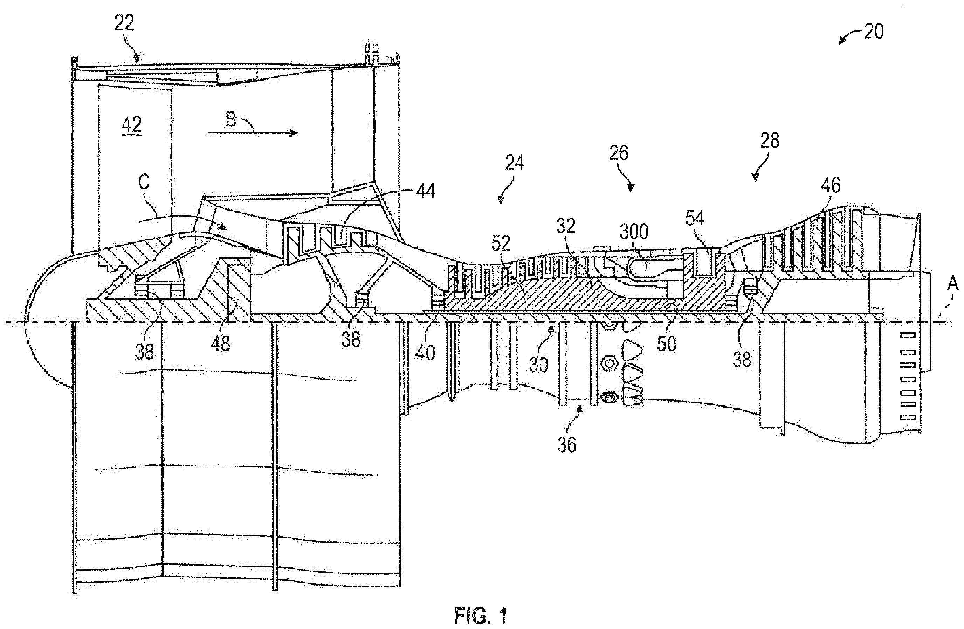

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 300 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 300, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

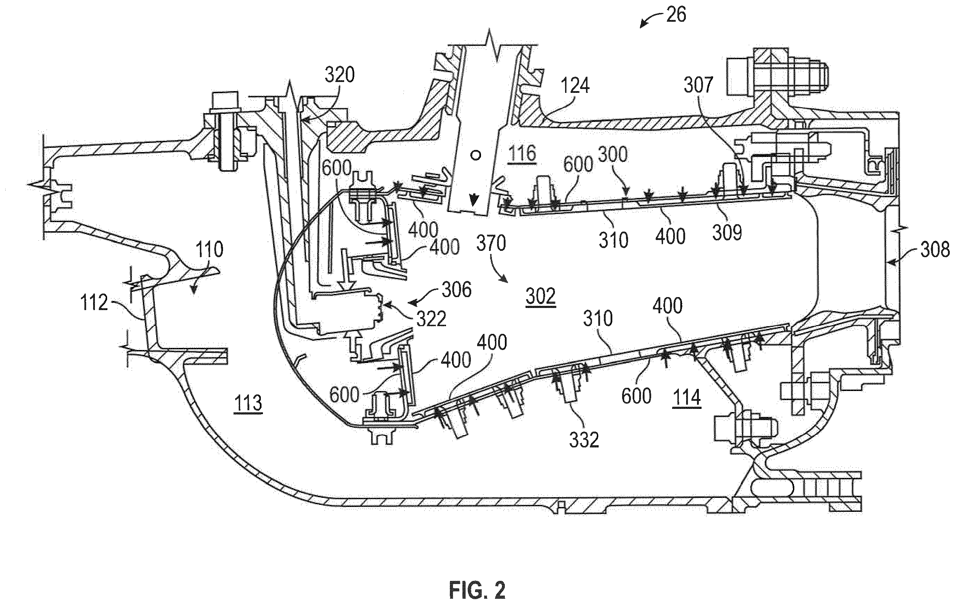

Referring now to FIG. 2 and with continued reference to FIG. 1, the combustor section 26 of the gas turbine engine 20 is shown. As illustrated, a combustor 300 defines a combustion chamber 302. The combustion chamber 302 includes a combustion area 370 within the combustion chamber 302. The combustor 300 includes an inlet 306 and an outlet 308 through which air may pass. The air may be supplied to the combustor 300 by a pre-diffuser 110. Air may also enter the combustion chamber 302 through other holes in the combustor 300 including but not limited to quench holes 310, as seen in FIG. 2.

As shown in FIG. 2, compressor air is supplied from a compressor section 24 into a pre-diffuser strut 112. As will be appreciated by those of skill in the art, the pre-diffuser strut 112 is configured to direct the airflow into the pre-diffuser 110, which then directs the airflow toward the combustor 300. The combustor 300 and the pre-diffuser 110 are separated by a shroud chamber 113 that contains the combustor 300 and includes an inner diameter branch 114 and an outer diameter branch 116. As air enters the shroud chamber 113, a portion of the air may flow into the combustor inlet 306, a portion may flow into the inner diameter branch 114, and a portion may flow into the outer diameter branch 116.

The air from the inner diameter branch 114 and the outer diameter branch 116 may then enter the combustion chamber 302 by means of one or more primary apertures 307 in the combustion liner 600 and one or more secondary apertures 309 in the heat shield panels 400. The primary apertures 307 and secondary apertures 309 may include nozzles, holes, etc. The air may then exit the combustion chamber 302 through the combustor outlet 308. At the same time, fuel may be supplied into the combustion chamber 302 from a fuel injector 320 and a pilot nozzle 322, which may be ignited within the combustion chamber 302. The combustor 300 of the engine combustion section 26 may be housed within a shroud case 124 which may define the shroud chamber 113.

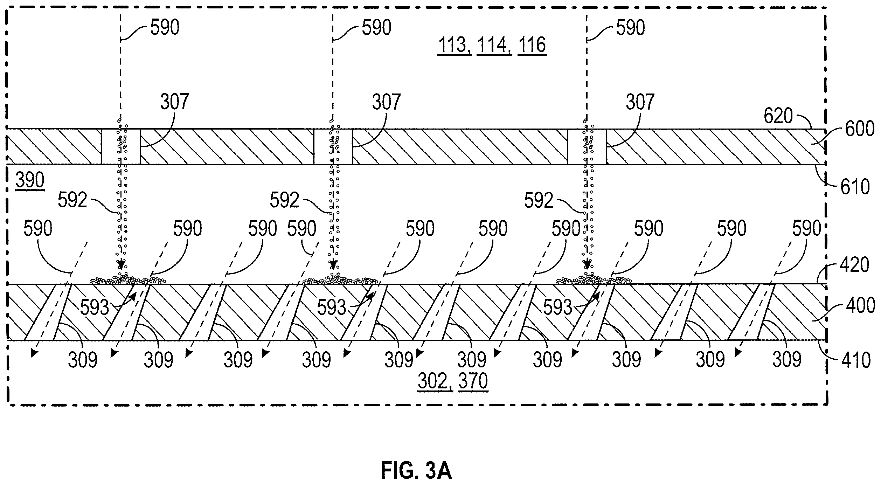

The combustor 300, as shown in FIG. 2, includes multiple heat shield panels 400 that are attached to the combustion liner 600 (See FIG. 3a). The heat shield panels 400 may be arranged parallel to the combustion liner 600. The combustion liner 600 can define circular or annular structures with the heat shield panels 400 being mounted on a radially inward liner and a radially outward liner, as will be appreciated by those of skill in the art. The heat shield panels 400 can be removably mounted to the combustion liner 600 by one or more attachment mechanisms 332. In some embodiments, the attachment mechanism 332 may be integrally formed with a respective heat shield panel 400, although other configurations are possible. In some embodiments, the attachment mechanism 332 may be a bolt or other structure that may extend from the respective heat shield panel 400 through the interior surface to a receiving portion or aperture of the combustion liner 600 such that the heat shield panel 400 may be attached to the combustion liner 600 and held in place. The heat shield panels 400 partial enclose a combustion area 370 within the combustion chamber 302 of the combustor 300.

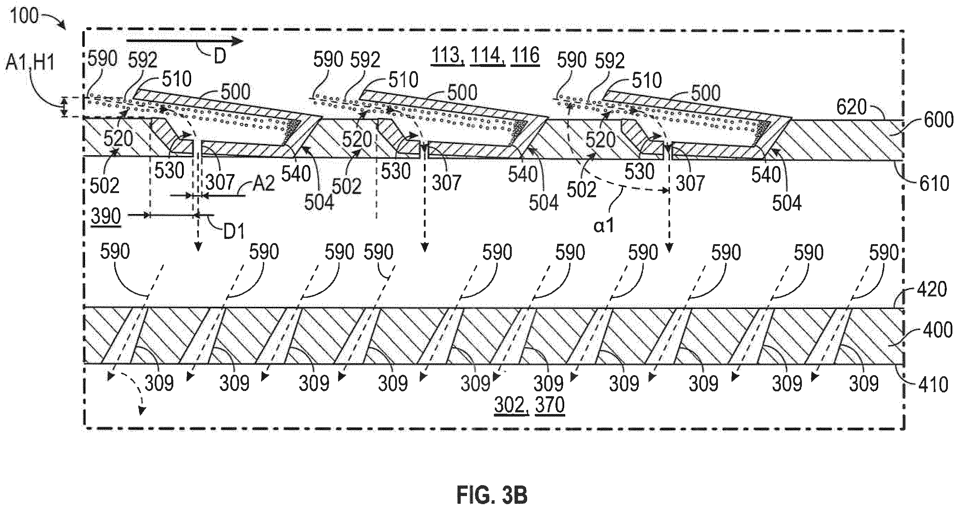

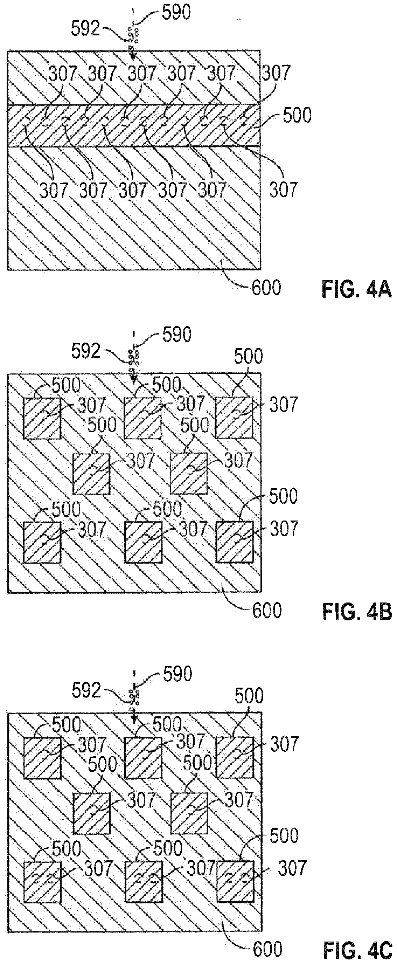

Referring now to FIGs. 3a, 3b, and 4a-4c with continued reference to FIGs. 1 and 2. FIG. 3a illustrates a heat shield panel 400 and combustion liner 600 of a combustor (see FIG. 1) of a gas turbine engine (see FIG. 1). The heat shield panel 400 and the combustion liner 600 are in a facing spaced relationship. FIG. 3b shows a particulate capture system 100 for a combustor 300 (see FIG. 1) of a gas turbine engine 20 (see FIG. 1), in accordance with an embodiment of the present disclosure. The heat shield panel 400 includes a first surface 410 oriented towards the combustion area 370 of the combustion chamber 302 and a second surface 420 first surface opposite the first surface 410 oriented towards the combustion liner 600. The combustion liner 600 has an inner surface 610 and an outer surface 620 opposite the inner surface 610. The inner surface 610 is oriented toward the heat shield panel 400. The outer surface 620 is oriented outward from the combustor 300 proximate the inner diameter branch 114 and the outer diameter branch 116.

The combustion liner 600 includes a plurality of primary apertures 307 configured to allow airflow 590 from the inner diameter branch 114 and the outer diameter branch 116 to enter an impingement cavity 390 in between the combustion liner 600 and the heat shield panel 400.

Each of the primary apertures 307 extend from the outer surface 620 to the inner surface 610 through the combustion liner 600. Each of the primary apertures 307 fluidly connects the impingement cavity 390 to at least one of the inner diameter branch 114 and the outer diameter branch 116. The heat shield panel 400 may include one or more secondary apertures 309 configured to allow airflow 590 from the impingement cavity 390 to the combustion area 370 of the combustion chamber 302. Each of the secondary apertures 309 extend from the second surface 420 to the first surface 410 through the heat shield panel 400. Airflow 590 flowing into the impingement cavity 390 impinges on the second surface 420 of the heat shield panel 400 and absorbs heat from the heat shield panel 400 as it impinges on the second surface 420. As seen in FIG. 3a, particulate 592 may accompany the airflow 590 flowing into the impingement cavity 390. Particulate 592 may include but are not limited to dirt, smoke, soot, volcanic ash, or similar airborne particulate known to one of skill in the art. As the airflow 590 and particulate 592 impinge upon the second surface 420 of the heat shield panel 400, the particulate 592 may begin to collect on the second surface 420, as seen in FIG. 3a. Particulate 592 collecting upon the second surface 420 of the heat shield panel 400 reduces the cooling efficiency of airflow 590 impinging upon the second surface 420, and thus may increase local temperatures of the heat shield panel 400 and the combustion liner 600. Particulate 592 collection upon the second surface 420 of the heat shield panel 400 may potentially create a blockage 593 to the secondary apertures 309 in the heat shield panels 400, thus reducing airflow 590 into the combustion area 370 of the combustion chamber 302. The blockage 593 may be a partial blockage or a full blockage.

The combustion liner 600 includes a combustion liner particulate capture device 500 configured to turn airflow 590 a selected angle α1 such that particulate 592 separates from the airflow 590. In an embodiment the selected angle α1 may be about 90°. Advantageously, the addition of a combustion liner particulate capture device 500 to the combustion liner 600 may help reduce the amount of particulate 592 entering the impingement cavity 390 and collecting on the second surface 420 of the heat shield panel 400, as seen in FIG. 3b. The combustion liner 600 may include one or more combustion liner particulate capture devices 500, as seen in FIG. 3b. The combustion liner particulate capture device 500 is attached to the combustion liner 600. The combustion liner particulate capture device 500 may be embedded in the combustion liner 600, as seen in FIG. 3b. The combustion liner particulate capture device 500 is configured to direct airflow 590 and particulate 592 proximate the outer surface 620 into the combustion liner particulate capture device 500, aerodynamically separate the airflow 590 and particulate 592, and expel the airflow 590 through at least one of the primary apertures 307 towards the one or more heat shield panels 400.

The combustion liner particulate capture device 500 may include a scoop portion 510 projecting outward from the outer surface 620 of the combustion liner 600 and into an airflow path D of the inner diameter branch 114 or the outer diameter branch 116. The scoop portion 510 is configured to capture airflow 590 and particulate 592 flowing through the inner diameter branch 114 and/or the outer diameter branch 116 and direct the airflow 590 and particulate 592 through a first orifice 520 and into a chamber 530 of the combustion liner particulate capture device 500. The first orifice 520 may be located at a forward end 502 of the combustion liner particulate capture device 500. The first orifice 520 may provide an opening to the chamber 530 in the direction of the airflow path D, as seen in FIG. 3b. It is understood that the first orifice 520 may provide an opening to the chamber 530 in any direction other than in the direction of the airflow path D. In a non-limiting example, the first orifice 520 may provide an opening to the chamber 530 in a direction opposite the direction of the airflow path D. The first orifice 520 may include one or more slots and/or holes. Although illustrated as a circle, the first orifice 520 may have various shapes including but not limited to, an oval, triangle, a square, a rectangle, pentagon, hexagon, or any other shape. In an embodiment, an area A1 of the first orifice 520 is larger than an area A2 of the primary apertures 307. In an embodiment, the area A1 of the first orifice 520 of a combustion liner particulate capture device 500 is at least three times as large as the area A2 of the primary aperture 307 fluidly connected to the first orifice 520 through the combustion liner particulate capture device 500. In an embodiment, the area A1 of the first orifice 520 of a combustion liner particulate capture device 500 is at least three times as large as the sum of areas A2 of the primary apertures 307 fluidly connected to the first orifice 520 through the combustion liner particulate capture device 500. Advantageously, having an area A1 of the first orifice 520 larger than the area A2 of a primary aperture 307 helps ensure that a rate of airflow into the impingement cavity 390 is not reduced or inhibited by flowing through the combustion liner particulate capture device 500. The airflow 590 carries particulates 592 as the airflow 590 is directed into the chamber 530. The scoop portion 510 is configured to direct the airflow 590 and particulates 592 towards a collection backstop 540 located at an aft end 504 of the combustion liner particulate capture device 500. As seen is FIG. 3b, the aft end 504 is opposite the forward end 502. The collection backstop 540 is shaped to redirect the airflow 590 such that the airflow 590 separates from the particulates 592 and the airflow 590 continues to flow to the primary aperture 307. The collection backstop 540 will redirect the airflow 590 through the primary aperture 307 while allowing the particulates 592 to collect at the collection backstop 540. As mentioned above, the combustion liner particulate capture device 500 is configured to turn airflow 590 a selected angle α1 such that particulate 592 separates from the airflow 590. Due to the mass size of the particulate 592, the particulate 592 cannot make the turn from the first orifice 520 to the primary aperture 307 and the momentum of the particulate 592 separates the particulate 592 from the airflow 590 in the chamber 530 and carries the particulate 592 into the collection backstop 540. In an embodiment the selected angle α1 may be about 90°. Advantageously, by aerodynamically separating out particulate 592 using the collection backstop 540, buildup of particulate 592 on the second side 420 of the heat shield panel 400 may be reduced. In an embodiment, the chamber 530 fluidly connects to the primary aperture 307 at a location that is at a distance D1 away from first orifice 520 that is no greater than three times a height HI of the first orifice 520.

FIGs. 4a, 4b, and 4c illustrate different implementations and configurations of one or more combustion liner particulate capture devices 500. In a first example, as shown in FIG. 4a, the combustion liner particulate capture device 500 may be a single device that extends circumferentially around the combustion liner 600. It is understood that FIG. 4a is a non-limiting illustration and there may be more than one rows of the single device circumferentially around the combustion liner 600. There may be one or more first orifices 520 (see FIG. 3b) that direct airflow 590 along with the particulates 592 into a single chamber 530 (see FIG. 3b), where the airflow 590 and the particulates 592 are aerodynamically separated as described above. Then the airflow 590 may exit the chamber 530 (see FIG. 3b) through one or more primary apertures 307 in the combustion liner 600, as seen in FIG. 4a.

In a second example, as shown in FIG. 4b, the combustion liner 600 may include one or more combustion liner particulate capture devices 500 in a staggered arrangement circumferentially around the combustion liner 600. It is understood that FIG. 4b is a non-limiting illustration and the combustion liner 600 may include one or more combustion liner particulate capture devices 500 in-line with each other as opposed to being staggered with each other. Each combustion liner particulate capture device 500 may have a first orifices 520 (see FIG. 3b) that directs airflow 590 along with the particulates 592 into a chamber 530 (see FIG. 3b), where the airflow 590 and the particulates 592 are aerodynamically separated as described above. Then the airflow 590 may exit the chamber 530 (see FIG. 3b) through a primary apertures 307 in the combustion liner 600, as seen in FIG. 4b.

In a third example, as shown in FIG. 4c, the combustion liner 600 may include one or more combustion liner particulate capture device 500 in a staggered arrangement circumferentially around the combustion liner 600. It is understood that FIG. 4c is a non-limiting illustration and the combustion liner 600 may include one or more combustion liner particulate capture devices 500 in-line with each other as opposed to being staggered with each other. Each combustion liner particulate capture device 500 may have a first orifices 520 (see FIG. 3b) that directs airflow 590 along with the particulates 592 into a chamber 530 (see FIG. 3b), where the airflow 590 and the particulates 592 are aerodynamically separated as described above. Then the airflow 590 may exit the chamber 530 (see FIG. 3b) through one or more primary apertures 307 in the combustion liner 600, as seen in FIG. 4c.

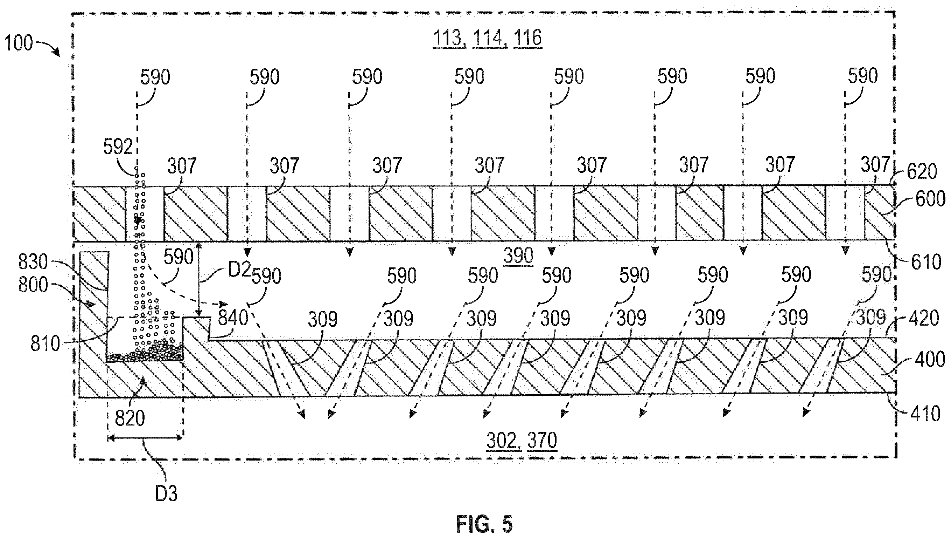

Referring now to FIG. 5 with continued reference to FIGs. 1, 2, 3a, 3b, and 4a-4c. FIG. 5 shows a particulate capture system 100 for a combustor 300 (see FIG. 1) of a gas turbine engine 20 (see FIG. 1). FIG. 5 illustrates a heat shield panel 400, a combustion liner 600, and a heat shield panel particulate capture device 800. The heat shield panel 400 includes a first surface 410 oriented towards the combustion area 370 of the combustion chamber 302 and a second surface 420 first surface opposite the first surface 410 oriented towards the combustion liner 600. The combustion liner 600 includes an inner surface 610 and an outer surface 620 opposite the inner surface 610. The inner surface 610 is oriented toward the heat shield panel 400. The outer surface 620 is oriented outward from the combustor 300 proximate the inner diameter branch 114 and the outer diameter branch 116.

The combustion liner 600 includes a plurality of primary apertures 307 configured to allow airflow 590 from the inner diameter branch 114 and the outer diameter branch 116 to enter an impingement cavity 390 in between the combustion liner 600 and the heat shield panel 400. Each of the primary apertures 307 fluidly connects the inner surface 610 and the outer surface 620. The heat shield panel 400 includes a plurality of secondary apertures 309 configured to allow airflow 590 from the impingement cavity 390 to the combustion area 370 of the combustion chamber 302. Each of the secondary apertures 309 fluidly connects the first surface 410 and the second surface 420. Airflow 590 flowing into the impingement cavity 390 impinges on the second surface 420 of the heat shield panel 400 and absorbs heat from the heat shield panel 400 as it impinges on the second surface 420. As seen in FIG. 5, particulates 592 may accompany the airflow 590 flowing into the impingement cavity 390. Particulate 592 may include but is not limited to dirt, smoke, soot, volcanic ash, or similar airborne pollutant known to one of skill in the art. As the airflow 590 and particulates 592 impinge upon the second surface 420 of the heat shield panel 400, the particulates 592 may begin to collect on the second surface 420, as was seen and described above in reference to FIG. 3a.

Advantageously, the addition of a heat shield panel particulate capture device 800 to the heat shield panel 400 may help reduce the amount of the particulates 592 entering the combustion area 370 of the combustion chamber 302 and also may help reduce the amount of particulate 592 collecting on the second surface 420 of the heat shield panel 400, as was seen in FIG. 3b above. The heat shield panel 400 may include one or more heat shield panel particulate capture devices 800, as seen in FIG. 5. The heat shield panel particulate capture device 800 may be formed in the second surface 420 as shown in FIG. 5 or may be attached to the second surface 420. The heat shield panel particulate capture device 800 is configured to receive at least one of the airflow 590 and particulate 592 from the one or more primary apertures 307. The heat shield panel particulate capture device 800 may be located in line with one or more of the primary apertures 307 such that the airflow 590 and particulate 592 from the one or more primary apertures 307 are directed through a first opening 810 into a collection well 820.

The heat shield panel particulate capture devices 800 may include a sealing wall 830 projecting away from the second surface 420 of the heat shield panel 400 and into the impingement cavity 390. The sealing wall 830 may seal the impingement cavity 390 from another cavity. The sealing wall 830 is configured to direct the airflow 590 and particulates 592 through the opening 810 and into the collection well 820 of the heat shield panel particulate capture device 800. Although FIG. 5 illustrates a sealing wall 830 heat shield panel particulate capture devices 800, the sealing wall 830 may not be required. For example, the dam 840 may encircle the collection well 820. The collection well 820 is shaped to redirect the airflow 590 and not the particulates 592 such that airflow 590 separates from the particulates 592. The collection well 820 will redirect the airflow 590 around a dam 840 projecting out from the second surface 420 of the heat shield panel 400 and into the impingement cavity 390, while allowing the particulates 592 to collect in the collection well 820. The collection well 820 will redirect the airflow 590 at a selected angle such that the airflow 590 will be able to make the turn while the particulates 592 will not be able to make the turn, as shown in FIG. 5. Due to the mass size of the particulate 592, the particulate 592 cannot make the turn from the primary aperture 307 and the momentum of the particulate 592 separates the particulate 592 from the airflow 590 and carries the particulate 592 into the collection well 820. As seen in FIG. 5, the dam 840 extends the collection well 820 away from the second surface 420 and the collection well 820 is configured to redirect the airflow 590 around the dam 840. In an embodiment, the dam 840 may be located at a distance D2 away from the inner surface 610 and the distance D2 is less than or equal to about three times a diameter D3 of the opening 810. In an embodiment, a secondary aperture 309 located proximate the dam 840 may be angled towards the dam 840, as shown in FIG. 5.

Advantageously, by aerodynamically separating out the particulates 592 using the collection well 820, buildup of particulate 592 on the second side 420 of the heat shield panel 400 may be reduced and/or eliminated. Further advantageously, by aerodynamically separating out the particulates 592 using the collection well 820, entry of particulate 592 into the combustion area 370 of the combustion chamber 302 may be reduced and/or eliminated.

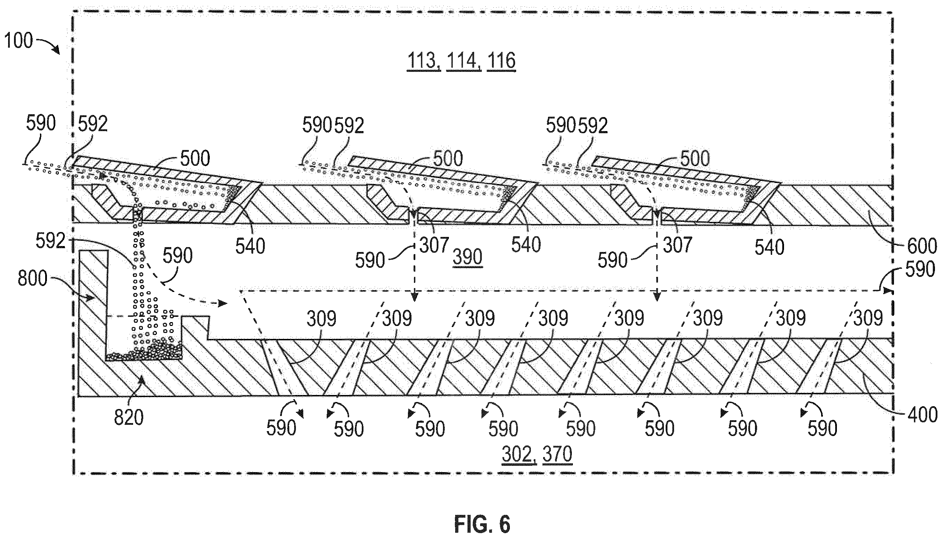

Referring now to FIG. 6 with continued reference to FIGs. 1, 2, 3a, 3b, 4a-4c, and 5. FIG. 6 shows a particulate capture system 100 for a combustor 300 (see FIG. 1) of a gas turbine engine 20 (see FIG. 1), in accordance with an embodiment of the present disclosure. FIG. 6 illustrates a heat shield panel 400, a combustion liner 600, a heat shield panel particulate capture device 800 attached to the heat shield panel 400, and a combustion liner particulate capture device 500 attached to the combustion liner 600. Airflow 590 along with particulates 592 are directed into the combustion liner particulate capture device 500 from the inner diameter branch 114 and the outer diameter branch 116, as described above. The addition of a combustion liner particulate capture device 500 to the combustion liner 600 may help reduce the amount of particulate 592 entering the impingement cavity 390 and collecting on the second surface 420 of the heat shield panel 400, while the heat shield panel particulate capture device 800 may provide additional protection against particulates 592 from collecting the outer surface 420 of the heat shield panel 400. The heat shield panel particulate capture device 800 may also help reduce the amount of particulate 592 entering into the combustion area 370 of the combustion chamber 302.

The combustion liner 600 may include one or more combustion liner particulate capture devices 500, as seen in FIG. 6. As described above, the combustion liner particulate capture device 500 aerodynamically separates out particulates 592 from the airflow 590 using the collection backstop 540 and directs the airflow 590 through one or more primary aperture 307. In the unlikely event that one or more particulates 592 does not get aerodynamically separated by the collection backstop, then the airflow 590 and the particulates 592 are directed towards the heat shield panel particulate capture device 800 through the impingement cavity 390. As described above, the heat shield panel particulate capture device 800 aerodynamically separates out particulates 592 from the airflow 590 using the collection well 820 and directs the airflow 590 to one or more secondary apertures 307. Advantageously, utilizing a combustion liner particulate capture device 500 in the combustion liner 600 and a heat shield panel particulate capture device 800 in the heat shield panel 400 provides a primary and secondary means of aerodynamic particulate capture in order to help reduce collection of particulates 592 on the heat shield panel 400 and helps reduce entry of particulate 592 into the combustion area 370 of the combustion chamber 302. Advantageously by combining the combustion liner particulate capture device 500 and the heat shield panel particulate capture device 800, the heat shield panel particulate capture device 800 becomes more effective. The heat shield panel particulate capture device 800 creates a cross flow 590a in the impingement cavity 390 that further reduces adherence of particulate 592 on the heat shield panel 400. The cross flow 590a is more effective at reducing the adherence of particulate 592 if there is less particulate 592 in the impingement cavity 390. Thus, since the combustion liner particulate capture device 500 is reducing the amount of particulate 592 to make it into the impingement cavity 390, it is also increasing the effectiveness of the crossflow 590a produced by the heat shield panel particulate capture device 800.

Technical effects of embodiments of the present disclosure include incorporating particulate capture devices into the combustion liner surrounding the heat shield panels to help reduce collection of particulates on the heat shield panel and also help to reduce entry of the particulate into the combustion area of the combustion chamber.

The term "about" is intended to include the degree of error associated with measurement of the particular quantity based upon the equipment available at the time of filing the application. For example, "about" can include a non-limiting range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A shell of a combustor (300) for use in a gas turbine engine (20), the shell comprising:
a combustion liner (600) having an inner surface (610), an outer surface (620) opposite the inner surface, and a primary aperture (307) extending from the outer surface to the inner surface through the combustion liner; and
a heat shield panel (400) having a first surface (410) and a second surface (420), the inner surface of the combustion liner and the second surface of the heat shield panel defining an impingement cavity (390) therebetween in fluid communication with the primary aperture for cooling the second surface of the heat shield panel;
**characterised in that** the shell further comprises:
a particulate capture device (500) attached to the combustion liner (600), the particulate capture device being configured to capture airflow (590) and particulate (592) in an airflow path (D) proximate the outer surface (620) of the combustion liner, aerodynamically separate the airflow from the particulate, and expel the airflow through the primary aperture (307) towards the second surface (420) of the heat shield panel (400),
wherein the particulate capture device further comprises a collection backstop (540) configured to redirect the airflow to allow for separation of the particulate from the airflow while allowing the particulate to collect at the collection backstop, the collection backstop being located within the particulate capture device.

2. The shell of claim 1, wherein the particulate capture device (500) further comprises:
a scoop portion (510) projecting outward from the outer surface (620) of the combustion liner (600) and into the airflow path (D) proximate the outer surface of the combustion liner, wherein the scoop portion is configured to capture airflow (590) and particulate (592) flowing through the airflow path and direct the airflow and particulate through a first orifice (520) and into a chamber (530) of the particulate capture device.

3. The shell of claim 2, wherein:
the particulate capture device (500) is shaped to turn the airflow (590) between the first orifice (520) and the primary aperture (307) such that air particulate (592) is forced to separate from the airflow within the chamber (530).

4. The shell of claim 2 or claim 3, wherein an area (A1) of the first orifice (520) is greater than or equal to three times an area (A2) of the primary aperture
(307).

5. The shell of any of claims 2 to 4, wherein the primary aperture (307) is located away from the first orifice (520) at a distance (D1) less than or equal to three times a height (H1) of the first orifice (520).

6. The shell of any preceding claim, further comprising:
a heat shield panel particulate capture device (800) attached to the heat shield panel (400), the heat shield panel particulate capture device being configured to receive at least one of airflow (590) and particulate (592) from the primary aperture (307), wherein the heat shield panel particulate capture device is configured to aerodynamically separate the airflow from the particulate, and direct the airflow towards a secondary aperture (309) of the heat shield panel,
wherein the heat shield panel particulate capture device further comprises a collection well (820) configured to redirect the airflow to allow for separation of the particulate from the airflow while allowing the particulates to collect within the collection well, the collection well being located within the heat shield panel particulate capture device.

7. The shell of claim 6, wherein the collection well (820) is shaped to redirect the airflow (590) such that airflow separates from the particulate and the airflow continues to flow to the secondary aperture (309) of the heat shield panel (400).

8. The shell of claim 7, wherein the heat shield panel particulate capture device (800) further comprises:
a dam (840) projecting out from the second surface (420) of the heat shield panel (400), wherein the dam extends the collection well (820) away from the second surface of the heat shield panel, and wherein the collection well is configured to redirect the airflow (590) around the dam.

## Patentansprüche

1. Mantel einer Brennkammer (300) zur Verwendung in einem Gasturbinentriebwerk (20), wobei der Mantel Folgendes umfasst:
eine Brennkammerauskleidung (600), die eine Innenfläche (610), eine Außenfläche (620) gegenüber der Innenfläche und eine primäre Öffnung (307), die sich von der Außenfläche zur Innenfläche durch die Brennkammerauskleidung erstreckt, aufweist; und
eine Hitzeschildplatte (400), die eine erste Fläche (410) und eine zweite Fläche (420) aufweist, wobei die Innenfläche der Brennkammerauskleidung und die zweite Fläche der Hitzeschildplatte einen Prallhohlraum (390) dazwischen in Fluidverbindung mit der primären Öffnung zum Kühlen der zweiten Fläche der Hitzeschildplatte definieren;
**dadurch gekennzeichnet, dass** der Mantel ferner Folgendes umfasst:
eine Partikeleinfangvorrichtung (500), die an der Brennkammerauskleidung (600) angebracht ist, wobei die Partikeleinfangvorrichtung so konfiguriert ist, dass sie einen Luftstrom (590) und Partikel (592) in einem Luftstromweg (D) nahe der Außenfläche (620) der Brennkammerauskleidung einfängt, den Luftstrom aerodynamisch von den Partikeln trennt und den Luftstrom durch die primäre Öffnung (307) in Richtung auf die zweite Fläche (420) der Hitzeschildplatte (400) ausstößt,
wobei die Partikeleinfangvorrichtung ferner einen Sammelanschlag (540) umfasst, der so konfiguriert ist, dass er den Luftstrom umleitet, um eine Trennung der Partikel vom Luftstrom zu ermöglichen, während er ermöglicht, dass sich die Partikel an dem Sammelanschlag sammeln, wobei der Sammelanschlag innerhalb der Partikeleinfangvorrichtung angeordnet ist.

2. Mantel nach Anspruch 1, wobei die Partikeleinfangvorrichtung (500) ferner Folgendes umfasst:
einen Auffangabschnitt (510), der von der Außenfläche (620) der Brennkammerauskleidung (600) nach außen und in den Luftstromweg (D) nahe der Außenfläche der Brennkammerauskleidung vorragt, wobei der Auffangabschnitt so konfiguriert ist, dass er den Luftstrom (590) und Partikel (592), die durch den Luftstromweg strömen, einfängt und den Luftstrom und die Partikel durch einen ersten Austritt (520) und in eine Kammer (530) der Partikeleinfangvorrichtung leitet.

3. Mantel nach Anspruch 2, wobei:
die Partikeleinfangvorrichtung (500) so geformt ist, dass sie den Luftstrom (590) zwischen dem ersten Austritt (520) und der primären Öffnung (307) so wendet, dass Luftpartikel (592) gezwungen werden, sich von dem Luftstrom innerhalb der Kammer (530) zu trennen.

4. Mantel nach Anspruch 2 oder Anspruch 3, wobei ein Flächeninhalt (A1) des erste Austritts (520) größer oder gleich dreimal ein Flächeninhalt (A2) der primären Öffnung (307) ist.

5. Mantel nach einem der Ansprüche 2 bis 4, wobei die primäre Öffnung (307) von dem ersten Austritt (520) um einen Abstand (D1) weg angeordnet ist, der kleiner oder gleich dreimal eine Höhe (H1) des ersten Austritts (520) ist.

6. Mantel nach einem der vorstehenden Ansprüche, ferner Folgendes umfassend:
eine Hitzeschildplatten-Partikeleinfangvorrichtung (800), die an der Hitzeschildplatte (400) angebracht ist, wobei die Hitzeschildplatten-Partikeleinfangvorrichtung so konfiguriert ist, dass sie mindestens eines aus einem Luftstrom (590) und Partikel (592) aus der primären Öffnung (307) aufnimmt, wobei die Hitzeschildplatten-Partikeleinfangvorrichtung so konfiguriert ist, dass sie den Luftstrom aerodynamisch von den Partikeln trennt und den Luftstrom in Richtung auf eine sekundäre Öffnung (309) der Hitzeschildplatte leitet,
wobei die Hitzeschildplatten-Partikeleinfangvorrichtung ferner einen Sammelschacht (820) umfasst, der so konfiguriert ist, dass er den Luftstrom so umleitet, dass eine Trennung der Partikel von dem Luftstrom ermöglicht wird, während es gleichzeitig ermöglicht wird, dass die Partikel sich innerhalb des Sammelschachts sammeln, wobei der Sammelschacht innerhalb der Hitzeschildplatten-Partikeleinfangvorrichtung angeordnet ist.

7. Mantel nach Anspruch 6, wobei der Sammelschacht (820) so geformt ist, dass er den Luftstrom (590) so umleitet, dass sich der Luftstrom von den Partikeln trennt und der Luftstrom weiter zur sekundären Öffnung (309) der Hitzeschildplatte (400) strömt.

8. Mantel nach Anspruch 7, wobei die Hitzeschildplatten-Partikeleinfangvorrichtung (800) ferner Folgendes umfasst:
einen Damm (840), der von der zweiten Fläche (420) der Hitzeschildplatte (400) vorragt, wobei der Damm den Sammelschacht (820) von der zweiten Fläche der Hitzeschildplatte weg erweitert und wobei der Sammelschacht so konfiguriert ist, dass er den Luftstrom (590) um den Damm umleitet.

## Revendications

1. Enveloppe d'une chambre de combustion (300) destinée à être utilisée dans un moteur à turbine à gaz (20), l'enveloppe comprenant :
une chemise de combustion (600) ayant une surface intérieure (610), une surface extérieure (620) opposée à la surface intérieure, et une ouverture primaire (307) s'étendant depuis la surface extérieure vers la surface intérieure à travers la chemise de combustion ; et
un panneau de protection thermique (400) ayant une première surface (410) et une seconde surface (420), la surface intérieure de la chemise de combustion et la seconde surface du panneau de protection thermique définissant une cavité d'impact (390) entre elles en communication fluidique avec l'ouverture primaire pour refroidir la seconde surface du panneau de protection thermique ;
**caractérisée en ce que** l'enveloppe comprend en outre :
un dispositif de capture de particules (500) fixé à la chemise de combustion (600), le dispositif de capture de particules étant conçu pour capturer le flux d'air (590) et les particules (592) dans un trajet de flux d'air (D) à proximité de la surface externe (620) de la chemise de combustion, séparer de manière aérodynamique le flux d'air des particules, et expulser le flux d'air à travers l'ouverture primaire (307) vers la seconde surface (420) du panneau de protection thermique (400),
dans laquelle le dispositif de capture de particules comprend en outre un antidévireur de collecte (540) conçu pour rediriger le flux d'air pour permettre la séparation des particules du flux d'air tout en permettant aux particules de s'accumuler au niveau de l'antidévireur de collecte, l'antidévireur de collecte étant situé à l'intérieur du dispositif de capture de particules.

2. Enveloppe selon la revendication 1, dans laquelle le dispositif de capture de particules (500) comprend en outre :
une partie écope (510) faisant saillie vers l'extérieur depuis la surface extérieure (620) de la chemise de combustion (600) et dans le trajet de flux d'air (D) à proximité de la surface extérieure de la chemise de combustion, dans laquelle la partie écope est conçue pour capturer le flux d'air (590) et les particules (592) s'écoulant à travers le trajet de flux d'air et diriger le flux d'air et les particules à travers un premier orifice (520) et dans une chambre (530) du dispositif de capture de particules.

3. Enveloppe selon la revendication 2, dans laquelle :
le dispositif de capture de particules (500) est formé de manière à faire tourner le flux d'air (590) entre le premier orifice (520) et l'ouverture primaire (307) de sorte que les particules d'air (592) sont forcées de se séparer du flux d'air à l'intérieur de la chambre (530).

4. Enveloppe selon la revendication 2 ou la revendication 3, dans laquelle une superficie (A1) du premier orifice (520) est supérieure ou égale à trois fois une superficie (A2) de l'ouverture primaire (307).

5. Enveloppe selon l'une quelconque des revendications 2 à 4, dans laquelle l'ouverture primaire (307) est située à distance du premier orifice (520) à une distance (D1) inférieure ou égale à trois fois une hauteur (H1) du premier orifice (520).

6. Enveloppe selon une quelconque revendication précédente, comprenant en outre :
un dispositif de capture de particules de panneau de protection thermique (800) fixé au panneau de protection thermique (400), le dispositif de capture de particules de panneau de protection thermique étant conçu pour recevoir au moins un flux d'air (590) et des particules (592) provenant de l'ouverture primaire (307), dans laquelle le dispositif de capture de particules de panneau de protection thermique est conçu pour séparer de manière aérodynamique le flux d'air des particules, et diriger le flux d'air vers une ouverture secondaire (309) du panneau de protection thermique,
dans laquelle le dispositif de capture de particules de panneau de protection thermique comprend en outre un puits de collecte (820) conçu pour rediriger le flux d'air afin de permettre la séparation des particules du flux d'air tout en permettant aux particules de s'accumuler dans le puits de collecte, le puits de collecte étant situé à l'intérieur du dispositif de capture de particules de panneau de protection thermique.

7. Enveloppe selon la revendication 6, dans laquelle le puits de collecte (820) est formé pour rediriger le flux d'air (590) de sorte que le flux d'air se sépare des particules et que le flux d'air continue de s'écouler vers l'ouverture secondaire (309) du panneau de protection thermique (400).

8. Enveloppe selon la revendication 7, dans laquelle le dispositif de capture de particules de panneau d'écran thermique (800) comprend en outre :
un barrage (840) faisant saillie à partir de la seconde surface (420) du panneau de protection thermique (400), dans laquelle le barrage prolonge le puits de collecte (820) depuis la seconde surface du panneau de protection thermique, et dans laquelle le puits de collecte est conçu pour rediriger le flux d'air (590) autour du barrage.
